# EUROPEAN PATENT APPLICATION

(11) **EP 4 763 695 A1**
(43) Date of publication of application: **24.06.2026**
(21) Application number: 25224021.3
(22) Date of filing: 16.12.2025
(51) Int. Cl.: B64C 3/56

(54) **HINGE ARRANGEMENT FOR AN AIRCRAFT WING**

(30) Priority: 17.12.2024 GB 202418499
(71) Applicant: Airbus Operations Limited, Bristol BS34 7PA (GB)
(72) Inventor: SPITZER, Frank, Bristol, BS34 7PA (GB); HAND, Matthew, Bristol, BS34 7PA (GB); MORRELL, Paul, Bristol, BS34 7PA (GB)
(74) Representative: Mathys & Squire

(57) **Abstract**

A hinge arrangement for an aircraft wing is provided, for providing a folding wing-tip. The hinge arrangement comprises a first mount (20) for securing in a first wing section (20) and a second mount (22) for securing to a second relatively foldable wing section (22), each having a plurality of hinge elements - first hinge elements (34) and second hinge elements (36) - arranged along a hinge axis (38). The arrangement further comprises a latching arrangement for securing the mounts against folding movement, the latch arrangement having a latch axis (44) spaced from the hinge axis (38) in a substantially spanwise direction so as to extend into the wing box. This configuration can be contained within the outer mould line of the wing, thereby reducing the need for an external fairing.

## Description

### FIELD OF THE INVENTION

This invention relates to a hinge arrangement for an aircraft wing, for example for folding a wing tip of an aircraft wing to reduce the width of the aircraft on the ground. Such a hinge arrangement may also be used for other movable surfaces or structures of an aircraft, such as flight control surfaces, which can be moved relative to a fixed part of the aircraft.

### BACKGROUND OF THE INVENTION

There is a trend for aircraft wings to have an increased span in order to increase aerodynamic efficiency. However ground structures which need to accommodate the aircraft, such as gates at terminals, are limited in size. Therefore it can be beneficial for aircraft wings to be provided with a folding wing tip part or outer wing structure such that the wing tip may be folded upwardly to reduce the span of the aircraft wings on the ground. Such folding wing tips are generally required to be latchable and lockable in place, in particular so as to be secured in an unfolded or in-line condition during flight.

Some current aircraft, including military and commercial aircraft, have a folding wing section with a joint mechanism positioned between a fixed part of the wing, also known as a wing box, and a movable or folding part, also known as a wing tip. The joint is commonly arranged along a hinge line which extends generally chord-wise between the fixed wing part and the movable wing part.

Where the wing has a relatively long chord and/or where the wing loading is relatively small, such as for many military aircraft, a suitable hinge mechanism can generally be accommodated within the wing profile. However, where the wing loading is relatively high compared to the size of the wing profile, such as for some commercial aircraft, in particular single aisle or long range aircraft, it can be difficult to accommodate the hinge mechanism within the wing profile.

Such hinge mechanisms commonly feature hinge elements having connection lugs with an integrated latch for securing the folding mechanism. These can protrude out of the outer mould line (OML) of the lower wing profile or cover.

This protrusion has caused the requirement for an aerodynamic fairing to contain the structure, adding to the drag, part count, weight and cost etc. In such cases, the pitch between the hinge axis and latch centre line tends to be small in order to reduce the protrusion (e.g. less than 125mm). However, reducing the hinge/latch pitch increases flight loads across the joint and thus increase the stress and consequent size and weight of the structure.

This invention aims to alleviate this issue.

### SUMMARY OF THE INVENTION

According to the invention, there is provided a hinge arrangement for an aircraft wing comprising: a first mount for securing to a first wing section, the mount having a plurality of first hinge elements, and a second mount for securing to a second wing section, the second mount having a plurality of second hinge elements, the first and second hinge elements being arranged along a hinge axis such that the first mount is foldable about the hinge axis relative to the second mount between an unfolded condition and a folded condition, wherein the first and second mounts are arranged to be secured against relative folding movement when in the unfolded condition by a latching arrangement having a latch axis, the latch axis being spaced from the hinge axis in a substantially spanwise direction.

This arrangement can enable beneficial packaging of the fold actuation, latching, and locking mechanism, and can eliminate the need for a fairing. Containing the hinge and latch arrangement within the upper and lower cover of the wing by profiling the hinge and latch spanwise, can eliminate or significantly reduce the requirement for an aerodynamic fairing and consequent attachment elements such as nuts and bolts. A decrease in the part count can simplify the industrial process and reduce the complexity and subsequent work required to assemble the structure in a production environment. This can also increase aerodynamic efficiency by reducing drag.

Additionally the pitch between the hinge and latch centre lines may be increased, reducing the flight loads across the joint. This alleviates the need for additional structure to support these flight loads, benefiting the overall wing weight, cost and simplicity. For example, the distance between the hinge axis and the latch axis may exceed 200mm, and preferably is up to 270mm.

Preferably at least a part of the first mount overlaps the at least a part of the second mount, and the latching arrangement is provided in the overlapping region. For example, in use, the latching arrangement can extend into the wing box such that the latch axis extends across the wing box.

The arrangement may comprise an actuator for causing relative folding movement of the first and second mounts, in which the actuator may be a linear actuator having a first end attached to the first mount, for example adjacent the latch axis, and a second end arranged in use to be fixed in relation to the second mount. For example, the second end may be arranged to be fixed to a main spar or other fixed part of the wing box structure. Alternatively the actuator may be a geared rotary actuator.

The latching arrangement may comprise a plurality of first latch elements provided on the first mount and a plurality of second latch elements provided on the second mount, in which the first latch elements extend from the first mount beyond the first hinge elements. The second latch elements may be recessed in the second mount behind the second hinge elements. The latch axis may in addition be arranged below the hinge axis with respect to the upward fold of the hinge arrangement.

Conveniently at least some of the first latch elements are integrated with at least some of the first hinge elements. For example the latch elements may be fewer in number than the hinge elements, such that only some of the hinge elements are integrated hinge/latch elements. Alternatively, all of the latch elements may be integrated with the hinge elements. Conveniently, the first and second hinge elements may be interleaved, for example alternating, along the hinge axis, and the first and second latch elements may also be interleaved and/or alternating along the latch axis. The latch elements may be arranged in groups, and the actuator may conveniently be provided in a first space between first and second groups of latch elements.

The first latch elements may be fixed to, for example being integral with, a panel extending from the first mount towards the latch axis, and preferably beyond the latch axis, and arranged to cover a lower face of the hinge arrangement. This can seal the lower portion of the wing without the need for additional parts or seals.

Preferably the first and second latch elements comprise latch bores arranged to be aligned in the unfolded condition, and the arrangement comprises at least one latch pin arranged to be deployable in the latch bores along the latch axis for securing the first and second latch elements against relative folding movement when the arrangement is in an unfolded condition.

Conveniently two latch pins are provided, for example one at each end of the latch axis, the latch pins being deployable inwardly towards the centre of the latch axis, although the latch pins could also be mounted towards the middle of the latch axis, deployable outwardly. For example, the latch pins may be provided in a second space between first and second groups of latch elements. There may be a removable cover in the panel, the cover being aligned with the second space, so as to provide access for maintenance or repair.

The first wing section may be a movable wing tip element and the second wing section may be a fixed wing element or wing box. Thus the latching arrangement may be contained within the wing box.

The invention also comprises a hinge mount for a hinge fitting as defined above, being a first mount or a second mount, and an aircraft wing comprising a hinge arrangement as defined above, the first mount being secured to a first wing section and the second mount being secured to a second relatively foldable wing section. Preferably the hinge arrangement does not extend outside the outer surfaces of the wing tip and the wing box respectively.

### BRIEF DESCRIPTION OF THE DRAWINGS

In order that the invention may be more readily understood, reference will now be made by way of example to the accompanying drawings, in which:
Figure 1 is an underneath perspective view of a prior art wing with a fairing containing the hinge and latch arrangement;
Figure 2 is a perspective view of a prior art hinge and latch fitting such as might be used in the wing of Figure 1;
Figure 3 is a schematic plan view of a hinge and latch arrangement;
Figure 4 is a perspective view of the arrangement of Figure 3;
Figure 5 is a perspective view of the wingtip fitting of Figure 4;
Figures 6A to 6D are underneath perspective views of the arrangement of Figure 3 in various positions;
Figures 7A and 7B is an end view of the arrangement of Figure 3 in different positions
Figure 8 is a schematic plan view of another hinge and latch arrangement;
Figure 9 is a perspective view of the arrangement of Figure 8;
Figure 10 is a perspective view of the wingtip fitting of Figure 8;
Figures 11A to 11C are underneath perspective views of the arrangement of Figure 8 in various positions; and
Figures 12A and 12B is an end view of the arrangement of Figure 8.

### DETAILED DESCRIPTION OF PREFERRED EMBODIMENTS

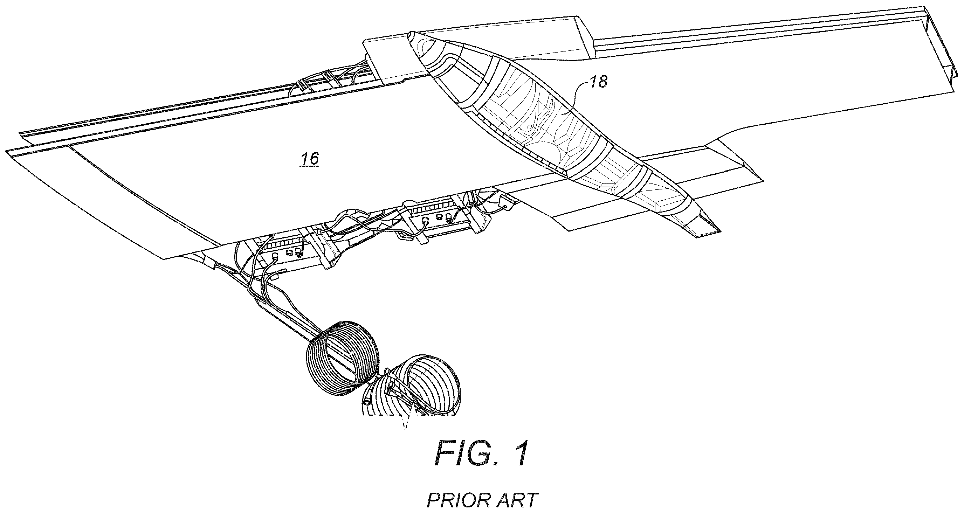

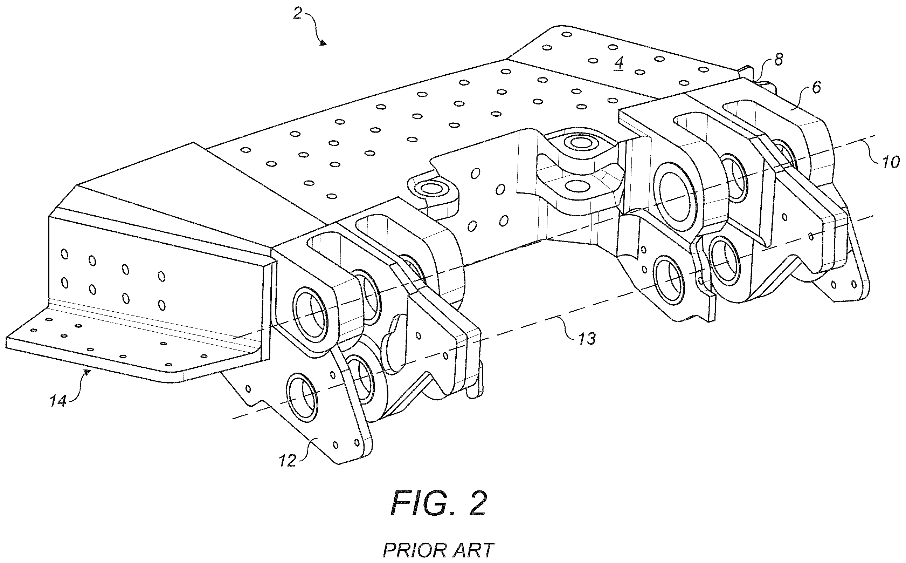

Referring to Figures 1 and 2, in an example hinge and latch arrangement according to the prior art the wing box fitting 2 comprises a bracket or mount 4 for attachment to a fixed wing section. The mount 4 has a plurality of hinge lugs 6 extending from a hinge end 8 thereof, arranged along a hinge axis 10. The mount 4 also comprises a plurality of latch lugs 12 for receiving one or more latch pins (not shown) along a latch axis 13. The hinge and latch arrangement also comprises a wing tip fitting (not shown) having corresponding interleaving hinge and latch lugs.

The latch lugs 12 also extend from the hinge end 8 of the bracket 4 below the hinge lugs 6. It can be seen that the latch lugs 12 extend below the lower edge 14 of the bracket 4, which attaches to the lower surface 16 of the wing profile, also known as the outer mould line. Therefore a fairing 18 has to be provided to house the latching mechanism.

This invention aims to provide an arrangement having a hinge axis around which the wing tip can rotate and fold and a location for the latch pins to extend into and lock the wing in the flight condition (unfolded) which can contain the structure entirely within the wing, thus negating the requirement for an aerodynamic fairing. This is achieved by providing integrated hinge/latch lugs which extend spanwise into the wing box.

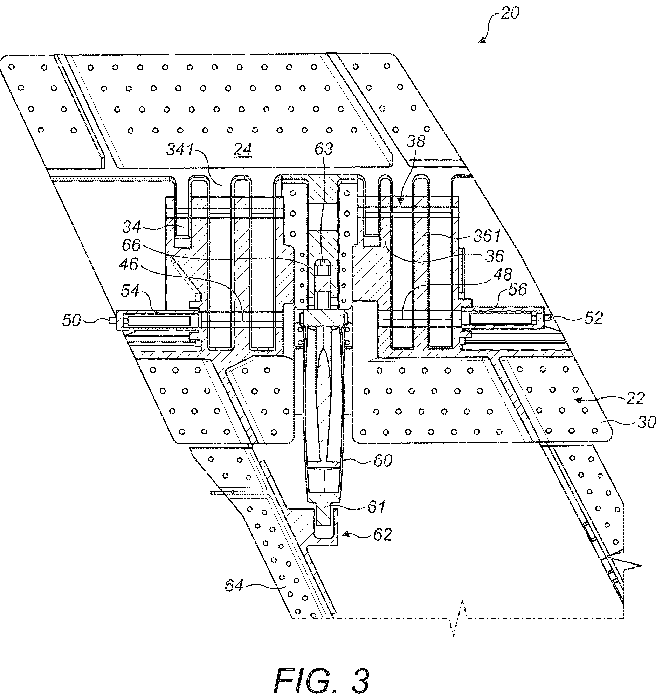

Referring to Figures 3, 4 and 5, a hinge and latch arrangement comprises first and second mounts comprising a wingtip fitting 20 and a wing box fitting 22. The wingtip fitting 20 includes flanges 24, 26 for attachment to the upper and lower surfaces of the wingtip profile, although any suitable size or shape of flange or bracket could be used to secure the fitting 20 to the inner end of the wingtip, being separate or integral parts. Similarly, the wing box fitting 22 includes upper and lower flanges 30, 32 for attaching to the upper and lower surfaces of the wing box profile.

The fittings 20, 22 are relatively foldable by means of a hinge comprising a first set of hinge elements in the form of first hinge lugs 34 extending from the wingtip fitting 20 and a second set of hinge elements in the form of second hinge lugs 36 extending from the wing box fitting 22. The hinge lugs 34, 36 are positioned so as to be interleaved, preferably alternating, and joined together with a hinge pin (not shown) extending along a hinge axis 38 through hinge apertures 39 provided in each of the hinge lugs 34, 36, to form a hinge extending substantially chordwise. This allows the wingtip fitting 20 to fold between a folded position and an unfolded or in line position as explained in more detail below.

At least some of the first hinge lugs are of an extended length, extending into and overlapping with the wing box fitting 22. The extended first hinge lugs 341 include latch apertures 40 at a distal end of each of the extended lugs 341, forming integrated hinge/latch lugs which extend substantially spanwise. In this example, there are four integrated spanwise extending hinge/latch lugs 341 provided on the wingtip fitting 20, and two first hinge lugs 34 which are not extended in length.

At least some of the second hinge lugs 36 are also of an extended length, extending backwardly so as to be recessed into the wing box fitting 22. This allows the integrated first lugs 341 to be interleaved, preferably alternating, with the second extended lugs 361. The second extended lugs 361 also have latch apertures 42 arranged to be aligned with the apertures 40 in the first extended lugs 341 when the fittings are in the unfolded (or in line) position, along a latch axis or line 44. The latch apertures 40, 42 are arranged to accept at least one latch pin, in this example a left latch pin 46 and a right latch pin 48. The latch pins can each be deployed from a position adjacent the right and left edges 50, 52 of the wing box fitting 22 from respective latch units 54, 56 into the latch apertures 40, 42 so as to lock the hinge arrangement into an unfolded position.

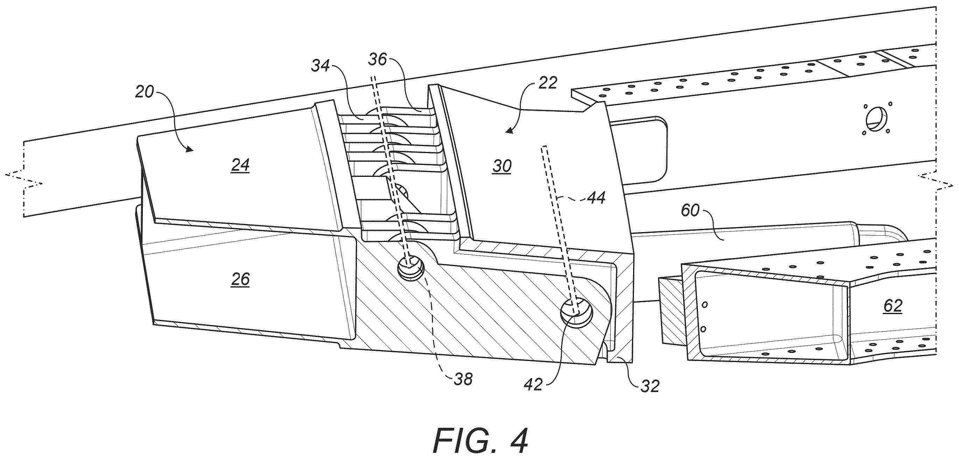

It can be seen that this arrangement provides a relatively high pitch between the hinge line or axis and latch line or axis, for example at least 200mm and preferably at least around 270mm, providing the benefits as described above. In addition, the structure can be entirely contained within the upper and lower cover outer mould lines (OMLs) of the wingtip and wing box, as shown in Figure 4, so as to negate the need for a fairing.

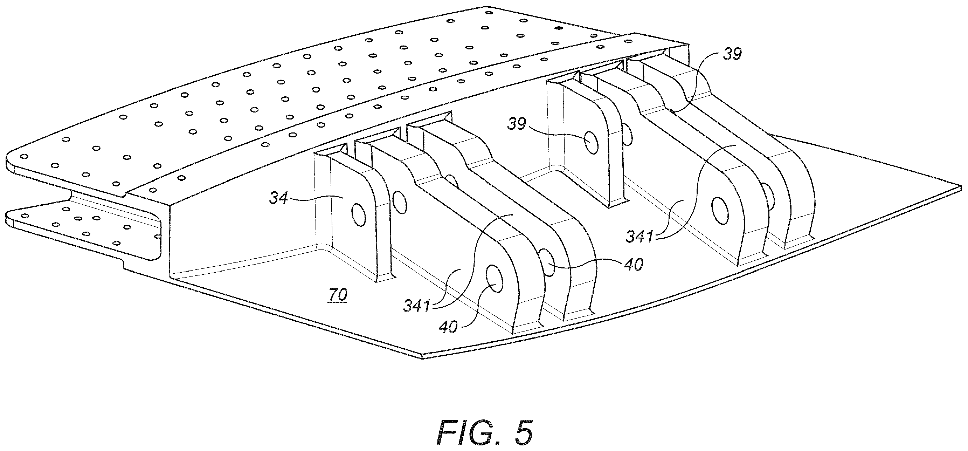

Referring to Figure 5, a panel 70 is provided on the lower face of the wingtip fitting 20 which extends across the fitting and attaches to the extended hinge lugs 341. The panel 70 is arranged to extend just beyond the latch line 44. The panel 70 can be machined as part of the wingtip fitting 22 so as to cover and seal the lower part of the hinge arrangement when in the unfolded position.

This hinge arrangement can be used with various methods of driving a folding wing. For example, the integrated hinge/latch lugs can be used in hinge arrangements that use either a GRA (geared rotary actuator) to drive a wing fold or a linear hydraulic actuator.

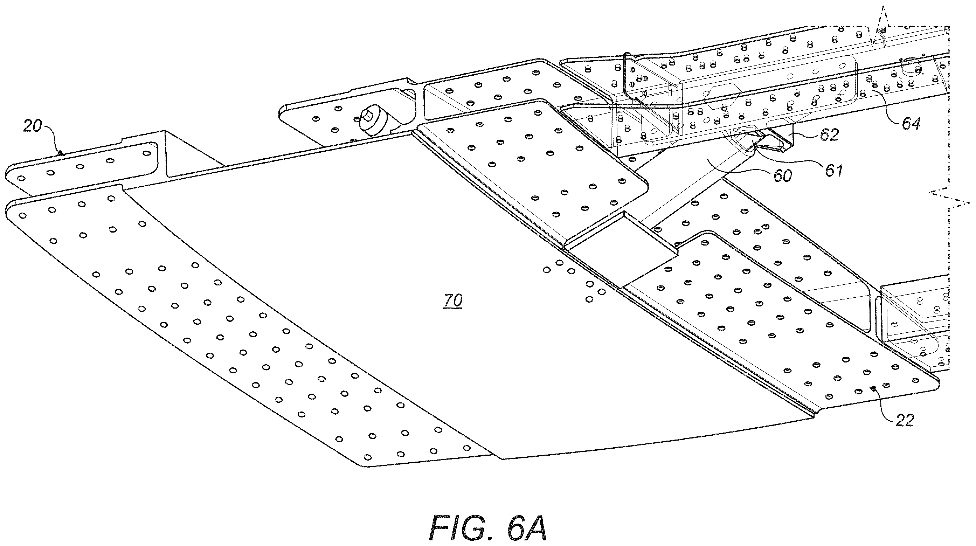

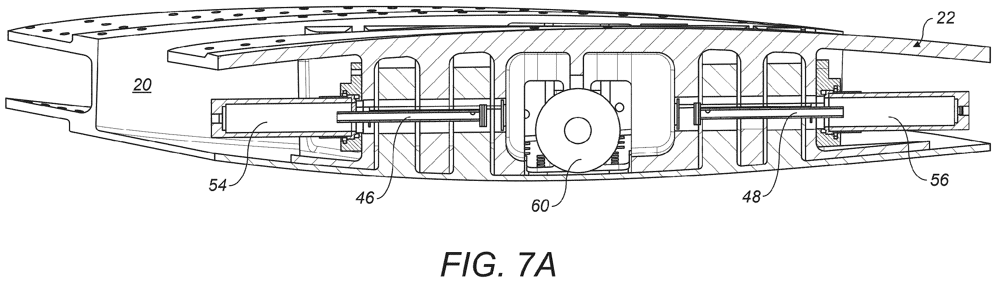

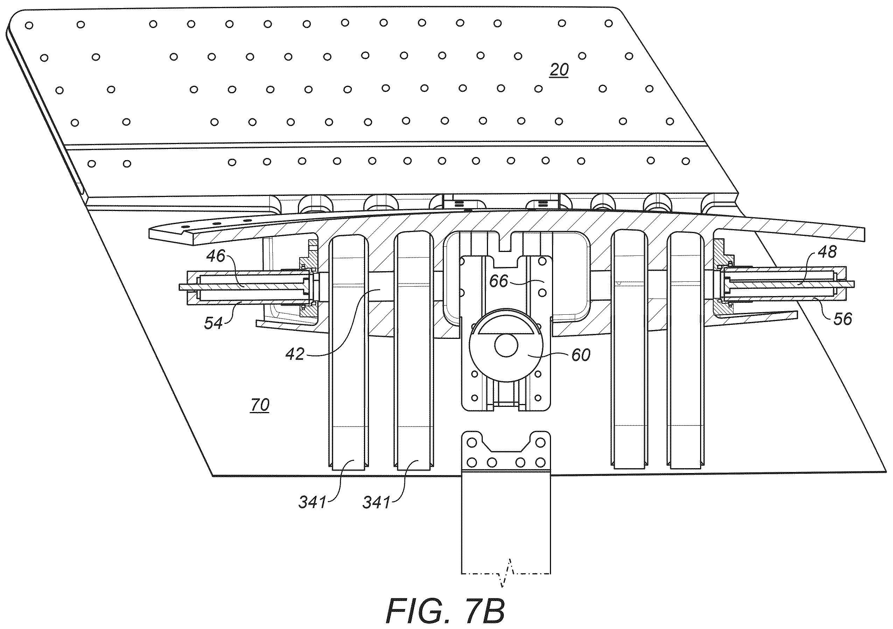

Referring also to Figures 6A to 6D, and Figures 7A and 7B, in this example the hinge arrangement is configured to be used with a folding wing tip which is powered by a linear hydraulic actuator 60. A first end 61 of the actuator 60 is arranged to be fixed in relation to the wing box fitting 22 on the fixed wing side via a wing box bracket 62 In this example the bracket 62 is attached to a wing spar 64 of the wing positioned to the rear of the wing box fitting 22 when the fitting 22 is attached to the wing box, although it will be appreciated that any suitable fixed structure could be used. A second end 63 of the actuator 60, being the end of an extendable actuator rod, is attached to a wingtip bracket 66 fixed to the wingtip fitting 20 on the wingtip side. This may be attached in any convenient location spaced from the hinge axis that provides adequate leverage.

The actuator rod 63 may be extended in order to drive the folding wingtip, whilst the wing box bracket 22 and adjacent first end 61 of the actuator 60 remain in a fixed position, as described in more detail below.

Figures 6A and 7A show the hinge arrangement in flight condition. The actuator 60 is not extended, and the hinge arrangement and thus the wing is unfolded or flat. To lock the wing in this condition, the latch housings or units 54, 65 will each deploy the latch pin 46, 48 contained within the latch housing into both the wing box lugs 36 and wingtip integrated hinge/latch lugs 34. This locks the wing because the latch pins 46, 48 prevent relative movement of the integrated hinge/latch lugs. This will normally remain in place for the duration of the flight.

It can be seen that the panel 70 forms a "clamshell" design, which can seal the lower side of the wing in the unfolded position. Because the integrated hinge/latch lugs 341 already require significant machining, it is economical to incorporate a large panel 70 on the lower section of the wingtip part 20. When the wingtip is unfolding into flight condition, this large section of material can simply cover and seal any gaps on the lower portion of the wing. The sealing is almost entirely completed autonomously when the wing tip is unfolded, without the need for any additional parts or seals.

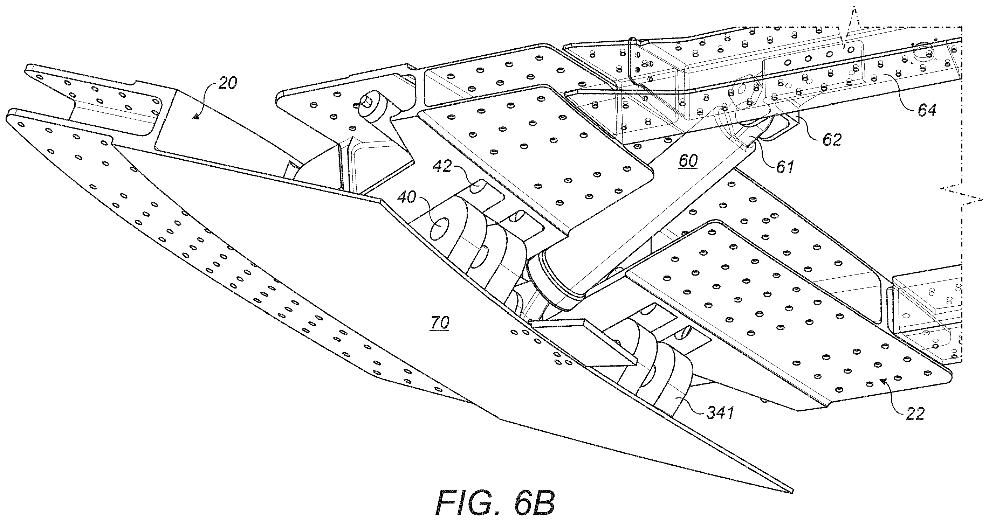

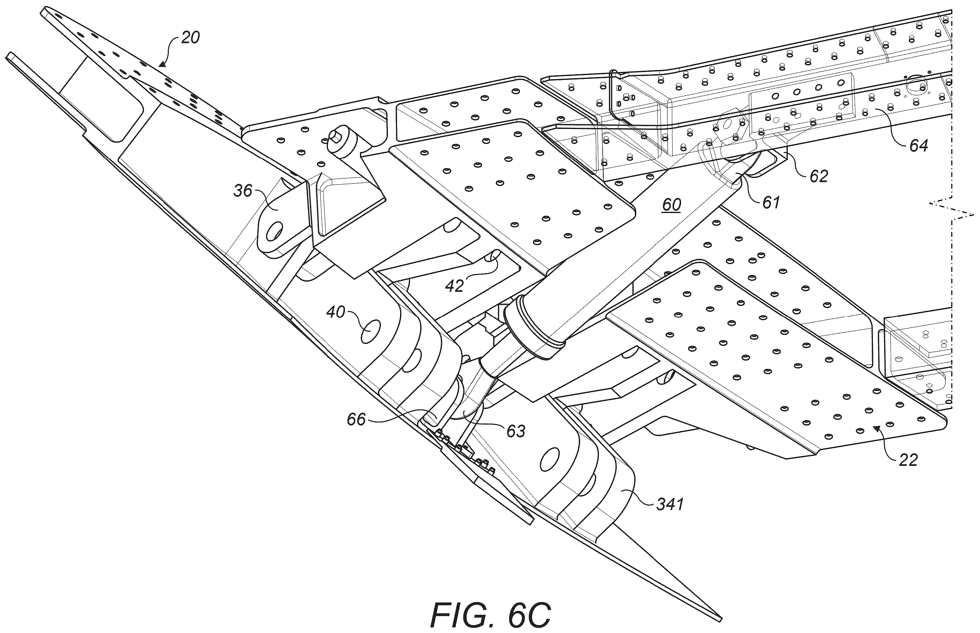

Referring in particular to figures 6A to 6D, the wing fold process is shown. Figure 6B shows the hinge arrangement folded to about 22 degrees. The latch pins 46, 48 are retracted from the apertures 42 in the latch lugs back into the latch housings 54, 56, unlocking the hinge arrangement and thus allowing the integrated hinge/ latch lugs 341 to move. The linear hydraulic actuator 60 will operate such that the rod 63 is extended. This causes the bracket 66 and thus the panel 70 attached to the wingtip mount 20 to be pushed away from the wing box, causing rotation of the wingtip fitting 20 about the hinge axis 38 so as to fold the wing tip upwardly. Figure 6C shows the hinge folded to about 86 degrees after further extension of the actuator rod 63. This process can take place after landing and whilst taxiing to the airport gate.

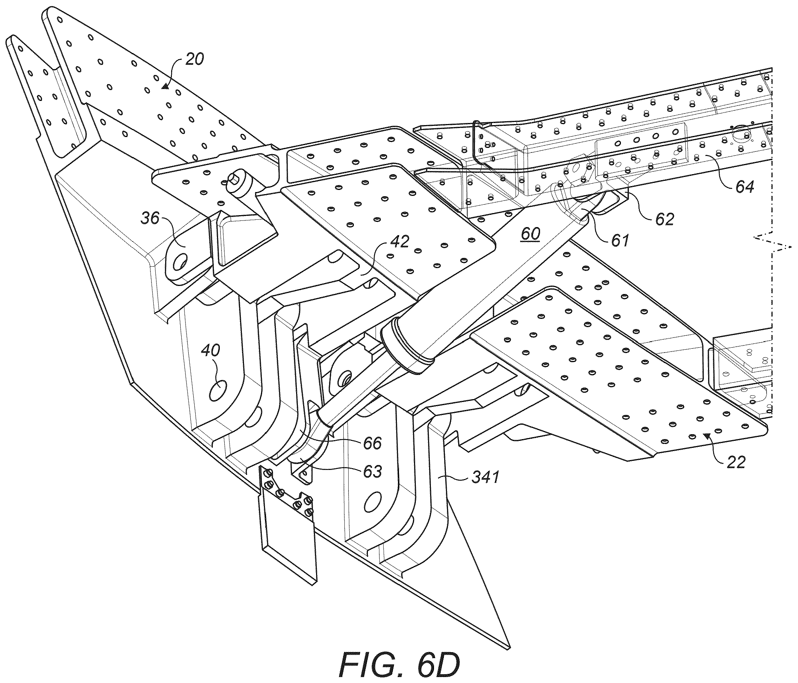

As shown in Figures 6D and 7B, further extension of the linear hydraulic actuator 60 will push against the panel 70 and drive the hinge arrangement and thus the wingtip into the folded ground condition. In this condition, the wingtip fitting is folded upwardly, with the panel 70 and associated extended lugs 342 protruding below the wing box fitting. In use, the folding of the wingtip fitting causes the wingtip to be folded upwardly relative to the wing box such that the effective wing span is reduced.

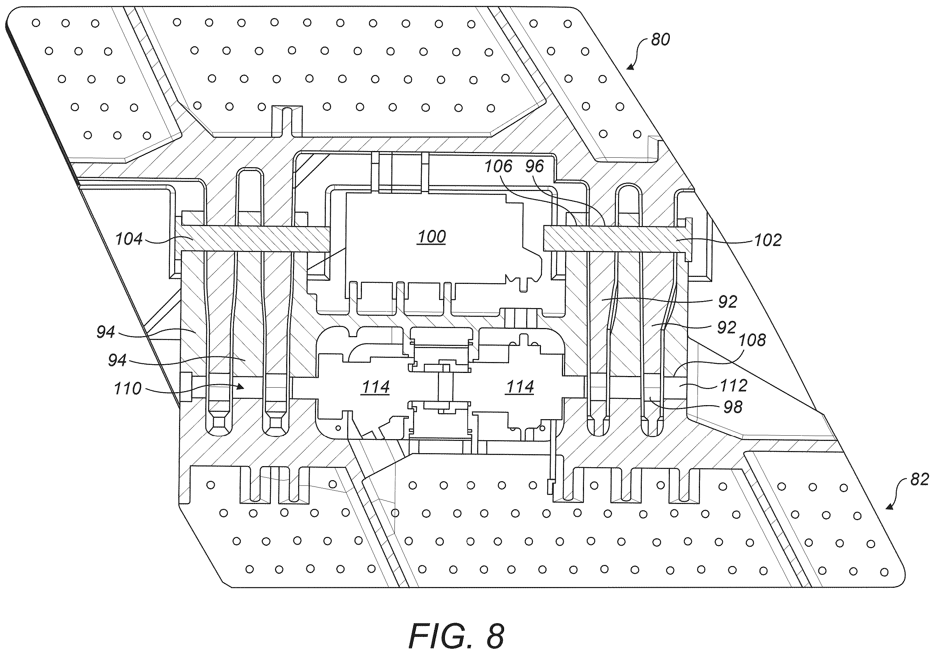

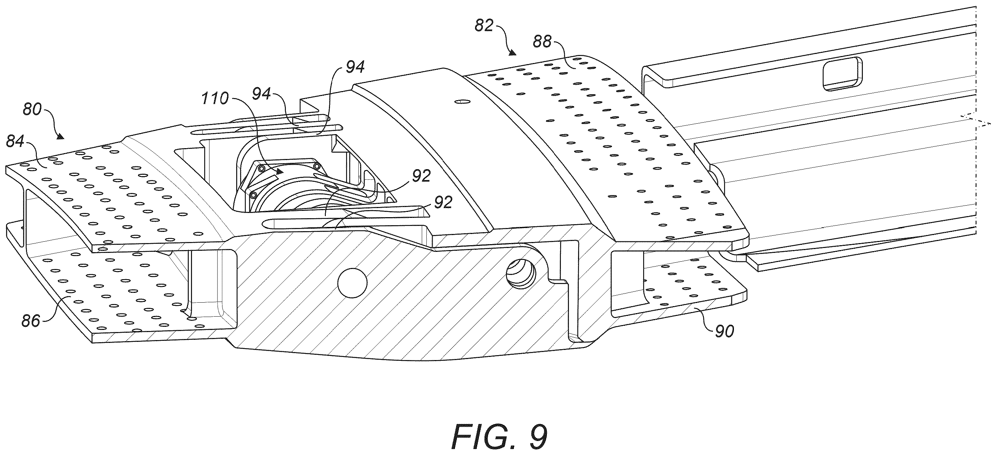

Referring to Figures 8, 9 and 10, another hinge and latch arrangement also comprises first and second mounts comprising a wingtip fitting 80 and a wing box fitting 82. The arrangement is similar to that of Figures 3 to 7. However they differ in the arrangement of the lugs.

The fittings 80, 82 include upper and lower flanges 84, 86, 88, 90 for attachment to the upper and lower surfaces of the wing profile as before. The hinge comprising first hinge lugs 92 extending from the wingtip fitting 80. In this example, the first hinge lugs 92 are each extended lugs including a hinge aperture 96 for a hinge pin and a latch aperture 98 for a latch pin, such that they each comprise integrated hinge/latch lugs. The lugs 92 are positioned in groups towards each edge of the fitting so as to leave a central first space 100 between them. In this example there are two pairs of lugs 92. The first space 100 may house an actuator mechanism for operating the hinge, such as a geared rotary actuator (GRA).

The first lugs 92 are interleaved with second lugs 94 extending from the wing box fitting 82, also each being extended in length and having both hinge apertures 106 and latch apertures 108 so as to provide integrated hinge/latch lugs. The second lugs 94 are also arranged in groups positioned towards each edge of the fitting, in this example being three in each group, such that there is a space between the groups. Each group of lugs 92, 93 is joined together with a hinge pin, being a right hinge pin 102, and a left hinge pin 104 to allow the wingtip fitting 80 to fold between a folded position and an unfolded or in line position.

The latch apertures 98, 108 of each group of lugs are arranged to accept a latch pin when aligned in the unfolded position of the fittings, in this example a left latch pin 110 and a right latch pin 112. Because of the positioning of the two groups of interleaved lugs, an actuator or a pair of actuators (not shown) for the latch pins 110, 112 may be positioned in a second space 114 between the groups of lugs towards the centre of the fittings, such that the latch pins 110, 112 may move outwardly from a central position, between a deployed position in the latch lugs 98, 108, and a withdrawn position in the second space 114.

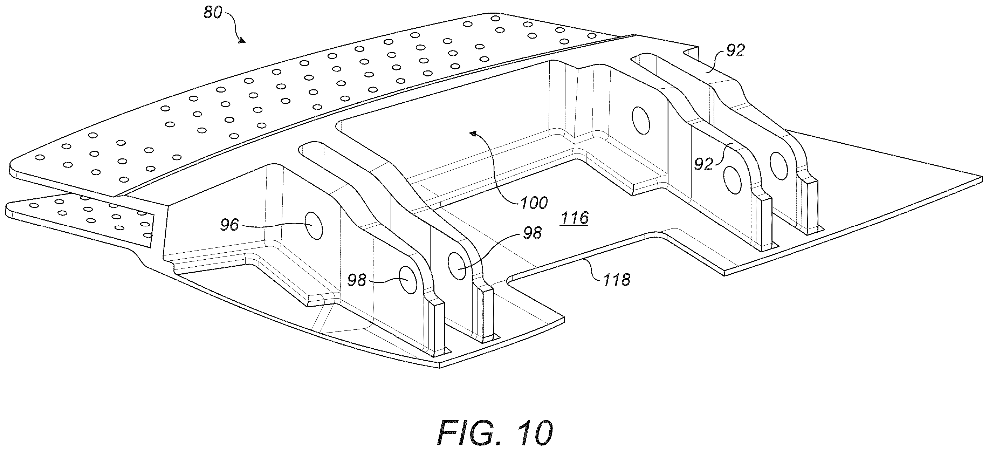

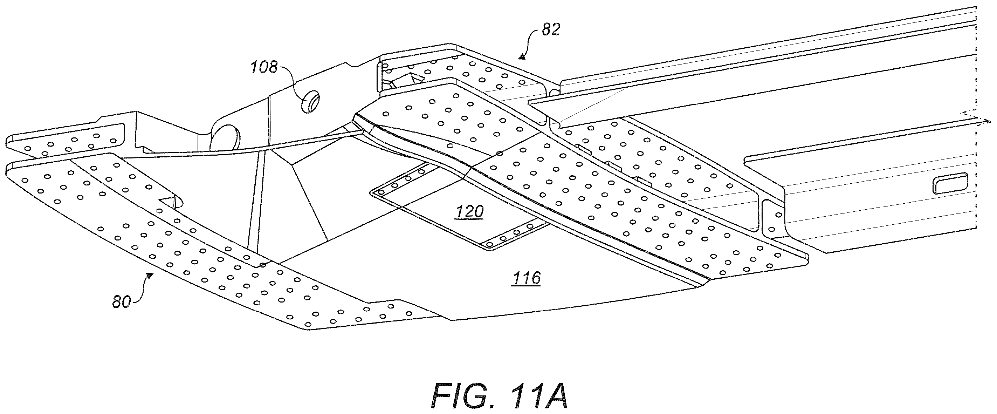

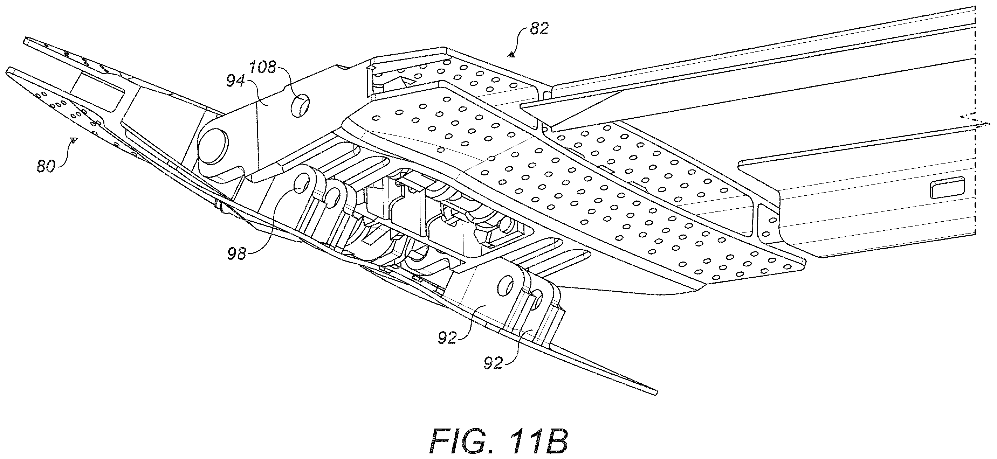

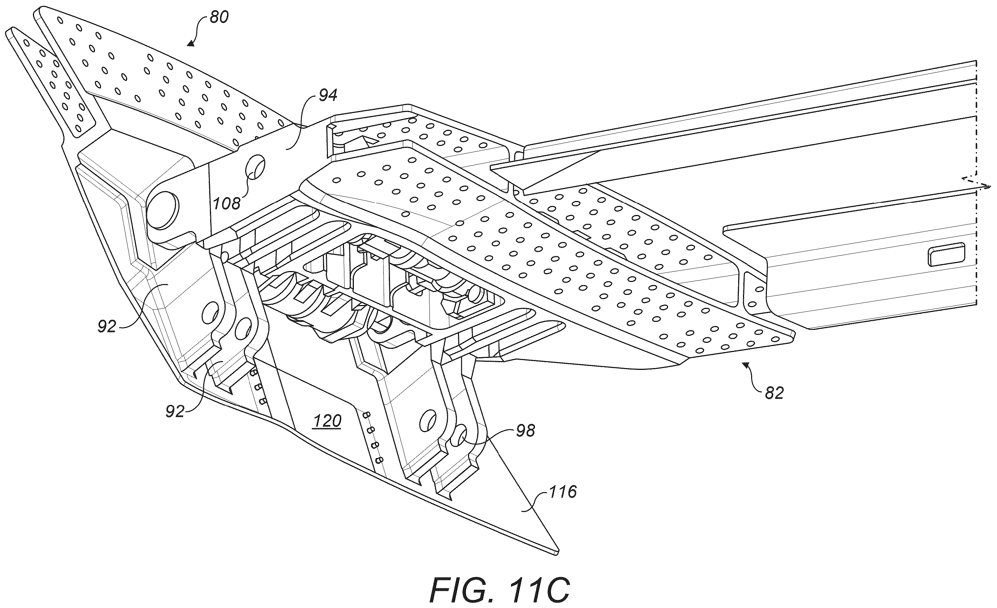

Referring to Figure 10, a panel 116 is provided on the lower face of the wingtip fitting 80 which extends across the fitting and attaches to the base of each extended lug 92. The panel 70 is arranged to extend just beyond an axis of the latch apertures 98, and the end of each lug 92, so as to cover and seal the lower surface of the wing fittings when unfolded. In this example, the panel 116 has a cut out 118 which can be covered with a removable cover 120 as shown in Figure 11. The removable cover 120 can allow access to internal components such as the actuator mechanism, for maintenance or repair.

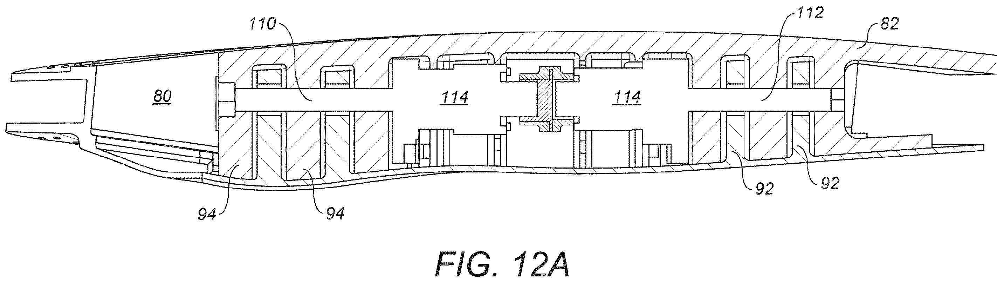

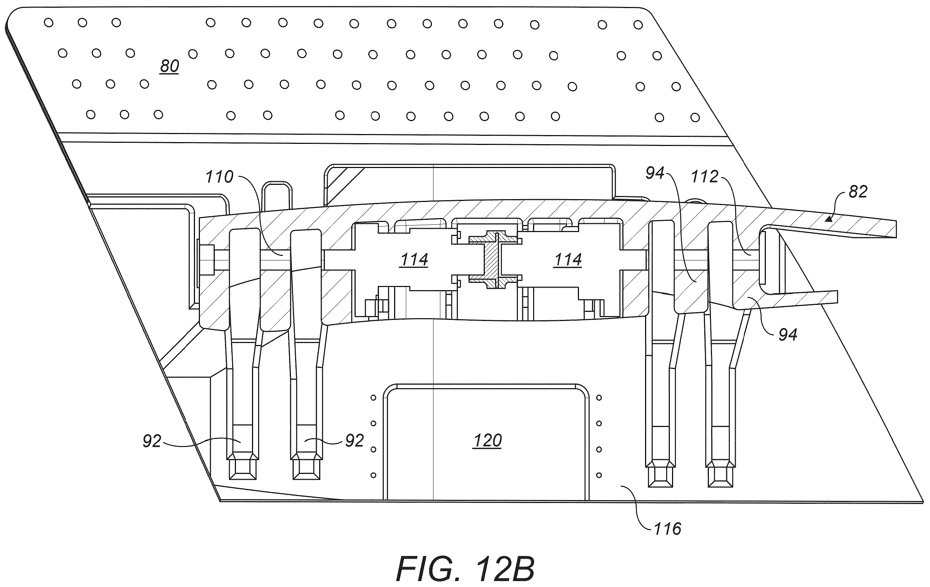

The folding process is illustrated in Figures 11A to 11C, and Figures 12A and 12B. Figures 11A and 12A show the hinge arrangement in flight condition, with the fittings, and thus the wing, unfolded or flat. To lock the wing in this condition, the latch actuators will deploy the latch pins 110, 112 out of the second space 114 to extend through the aligned latch apertures 98, 108 in the first and second lugs 92, 94 of the wing box 82 and wingtip 80. This locks the wing by preventing relative movement of the integrated hinge/latch lugs 92, 94. This will normally remain in place for the duration of the flight.

As shown in Figures 11C and 12B, operation of the GRA drives the hinge arrangement and thus the wingtip into the folded ground condition. In this condition, the wingtip fitting 80 is folded upwardly, with the panel 116 and associated extended lugs 92 protruding below the wing box fitting 82, in use causing the wingtip to be folded upwardly relative to the wing box such that the effective wing span is reduced.

## Claims

1. A hinge arrangement for an aircraft wing comprising:
a first mount for securing in a first wing section, the first mount having a plurality of first hinge elements, and
a second mount for securing in a second wing section, the second mount having a plurality of second hinge elements,
the first and second hinge elements being arranged along a hinge axis such that the first mount is foldable about the hinge axis relative to the second mount between an unfolded condition and a folded condition,
wherein the first and second mounts are arranged to be secured against relative folding movement when in the unfolded condition by a latching arrangement having a latch axis, the latch axis being spaced from the hinge axis in a substantially spanwise direction.

2. A hinge arrangement as claimed in claim 1, wherein at least a part of the first mount overlaps at least a part of the second mount, and the latching arrangement is provided in the overlapping region.

3. A hinge arrangement as claimed in any preceding claim, in which the distance between the hinge axis and the latch axis exceeds 200mm, and preferably is between 200mm and 270mm.

4. A hinge arrangement as claimed in any preceding claim, comprising an actuator for causing relative folding movement of the first and second mounts, in which the actuator is at least one of: a geared rotary actuator, and a linear actuator having a first end attached to the first mount adjacent the latch axis, and a second end arranged in use to be fixed in relation to the second mount.

5. A hinge arrangement as claimed in any preceding claim, wherein the latching arrangement comprises a plurality of first latch elements provided on the first mount and a plurality of second latch elements provided on the second mount, in which the first latch elements extend from the first mount beyond the respective hinge elements, and wherein the second latch elements are recessed behind the second hinge elements, optionally wherein at least some or all of the first latch elements are integrated with the first hinge elements.

6. A hinge arrangement as claimed in claim 5, wherein the actuator is provided in a first space between first and second groups of the latch elements.

7. A hinge arrangement as claimed in claim 5 or 6, wherein the first and second latch elements each comprise latch bores arranged to be aligned in the unfolded condition, and comprising at least one latch pin arranged to be deployable along the latch axis to secure the first and second latch elements against relative folding movement when the arrangement is in an unfolded condition.

8. A hinge arrangement as claimed in claim 7, comprising two latch pins arranged between opposing ends of the latch axis and the centre of the latch axis, optionally wherein the latch pins are each deployable in an outward direction from a second space between first and second groups of the latch elements.

9. A hinge arrangement as claimed in any of claims 5 to 8, wherein at least some of the first latch elements are fixed to, optionally integral with, a panel extending from the first mount beyond the latch axis and arranged to cover a lower face of the hinge arrangement, optionally wherein the panel comprises a removable cover aligned with the second space.

10. A hinge arrangement as claimed in any of claims 5 to 9, wherein the latch bores are arranged below the hinge axis.

11. A hinge arrangement as claimed in any of claims 5 to 10, wherein the first and second latch elements are fewer in number than the first and second hinge elements, respectively.

12. A hinge arrangement as claimed in any preceding claim, in which the first hinge elements are interleaved with the second hinge elements.

13. A hinge arrangement as claimed in any preceding claim, in which the first wing section is a movable wing tip element and the second wing section is a fixed wing element.

14. A hinge mount for a hinge fitting as claimed in any preceding claim, the hinge mount being one of a first mount and a second mount.

15. An aircraft wing comprising a hinge arrangement as claimed in any preceding claim, in which the first and second mounts are secured to a first wing section and a second wing section respectively, optionally wherein the hinge arrangement does not extend outside the outer surfaces of the wing tip and the wing box respectively.
